# EUROPEAN PATENT APPLICATION

(11) **EP 1 547 756 A1**
(43) Date of publication of application: **29.06.2005**
(21) Application number: 03258156.3
(22) Date of filing: 24.12.2003
(51) Int. Cl.: B29C 70/46, B29C 70/34, B29D 31/00, B29C 70/20, B29C 70/22

(54) **Method of manufacturing aircraft components**

(71) Applicant: Airbus UK Limited, Bristol, BS99 7AR (GB)
(72) Inventor: Cooper, Paul Anthony, Henleaze, Bristol, BS9 4LL (GB)
(74) Representative: Pearson, James Ginn

(57) **Abstract**

A composite material aircraft component, for example a rib or spar, is made by laying-up layers of fibre material of a first type, fibre material of a second type, and resin material, to form a layered fibre and resin arrangement, curing resin in the arrangement to form a unitary composite fibre material structure, and then trimming to form the aircraft component. The fibre material of the first type as initially provided is in the form of pre-preg material (i.e. fibres held in uncured resin material with which the material has previously been impregnated), and the fibre material of the second type as initially provided is in the form of a dry fibre mat (i.e. a coherent assembly of fibres which is not fully consolidated with resin material). The first and second materials each form a significant proportion of the aircraft component so formed.

## Description

The present invention relates to composite materials and to aircraft components made from or with composite materials. In particular the present invention relates to a composite material aircraft component and a method of manufacture thereof.

Composite fibre materials typically comprise continuous fibres embedded in a resin matrix. Composite materials are generally formed in two ways, namely either (i) by laying up, on a suitable moulding tool, layers of fibre material previously impregnated with resin (commonly referred to as "pre-preg" material) and then curing in an autoclave or (ii) by laying up layers of dry fibre mats, providing/infusing resin separately, and then curing in an autoclave. Using pre-preg material enables layers of the fibre material to comprise fibres all of which are aligned in a single direction without the need for the fibres to be woven or otherwise stitched. (Such weaving/stitching, being in a directional non-parallel to a single desired load bearing direction, may affect detrimentally the structural properties of the material.) Conversely, whilst dry fibre mats are generally so stitched/woven, laying up dry fibre mats enables more complex shapes to be formed as a result of the mats being more flexible and easier to cut and shape.

Thus the two above-described methods of manufacture of composite materials each have disadvantages associated with them. It is an object of the present invention to provide an improved method of manufacturing a composite material component and/or to provide a composite material having improved properties and/or being made in a manner that allows at least one of the above-described disadvantages to be mitigated.

The present invention provides, according to a first aspect, a method of manufacturing an aircraft component comprising the four sequential steps of:
a) providing fibre material of a first type, fibre material of a second type, and resin material, the fibre material of the first type being held in uncured resin material with which the material has previously been impregnated, and the fibres of the fibre material of the second type being in the form of a coherent assembly of fibres which is not fully consolidated with resin material,
b) forming, with the fibre material of the first and second types and the resin material, a layered fibre and resin arrangement,
c) curing resin in the arrangement to form a unitary composite fibre material structure, and
d) further processing the structure to form the aircraft component,
wherein each of the first and second materials form a significant proportion of the aircraft component so formed.

The present invention thus proposes the extensive use of two types of material having different properties. For example, in an embodiment of the present invention described in further detail below plies of unidirectional pre-preg material (each ply consisting of fibres lying in a single direction held within an uncured resin matrix) are combined with plies of multidirectional dry fabrics (each ply being in the form of a woven mat of fibres, the fibres lying in at least two different directions and being held together by their arrangement in the mat, rather than by resin material). The invention thus allows the properties of the fibre materials of both the first and the second type to contribute to the overall structural properties of the component so formed. The present invention also allows the fibre orientation within the component to be adapted to suit the particular structural requirements of the component to be made. Furthermore, the present invention may enable manufacturing times and costs to be reduced, because assembly rates can be increased in comparison to rates of laying-up of components assembled only from unidirectional pre-preg material and/or because, in the event that the desired unidirectional fibre content of the component is relatively low, automatic tape laying (ATL) machines, which might otherwise be conventionally used, may not be required.

The fibre material of the first and second types is conveniently provided in layered form, for example in the form of separate plies. The layered fibre and resin arrangement may include a layer comprising material of both the first and second types. The layered fibre and resin arrangement may include a region of a multiplicity of layers where the fibre material is either fibre material of the first type or fibre material of the second type (i.e. not fibre material of both types). The region may include a layer that extends from one end (or side) of the component to the opposite end (or side). Alternatively, the region may be localised within a portion of the component.

It is stated that each of the first and second fibre materials form a significant proportion of the aircraft component. In the context of the present invention each of the first and second types of material contribute significantly to the structural properties of the component, preferably the global structural properties. Typically, for both types of material to make such a significant contribution either or both of the following conditions, A & B, will be satisfied:
(A) the fibre content of the component has a minimum of 10% by weight or volume (whichever represents the least amount) of each type of fibre material, and
(B) in the case where the fibre materials form discrete layers in the component, the sum of the surface areas of the footprints of the layers of the first type is not less than 20% of the total area, and the sum of the surface areas of the footprints of the layers of the second type is not less than 20% of the total area, the total area being the sum of the surface areas of the footprints of all of the fibre layers in the component.

Whilst not preferred, either or both of the above conditions may be used as the only basis on which to decide whether the first and second fibre materials form a significant proportion of the aircraft component.

The resin material provided before forming the layered fibre and resin arrangement may be provided as a part of the fibre material of the first and/or second types. It is preferred however that at least some of the resin material, and preferably substantially all of the resin material that in the finished component is associated with the second type of fibre material, is provided separately. The step of forming a layered fibre and resin arrangement advantageously includes laying down layers of fibre material of the first and second types and layers of resin sheets. The resin sheets are preferably at least as flexible as the least flexible of the layers of fibre material, and are preferably more flexible than the most flexible of the layers of fibre material. Such flexibility may aid the formation of a component of a particular desired non-planar shape.

There may be a step, conducted before or during the forming of the layered fibre and resin arrangement, of combining the fibre material of the second type with resin material. For example, such a step may include combining a layer of fibre material of the second type and a resin sheet. The combining of the fibre material of the second type with resin material may simply consist of mechanically attaching the resin material to the fibre material. In the case where the resin material has inherent adhesive properties, for example if the resin is sticky or tacky, the combining of the fibre material of the second type with resin material may simply consist of fixing the resin material to the fibre material by means of those adhesive properties. The resultant combination of the fibre material of the second type and the resin material may form a material that, in the art, is referred to as "semi-preg" material. The step of combining the fibre material of the second type with resin material may be in the form of a semi-pregging process. It will be understood that whilst the resin material may be in direct contact with some of the fibres of the fibre material of the second type, the fibres are not fully consolidated with resin material and preferably only become fully consolidated during the curing process. In contrast, the fibres in pre-preg material are generally fully consolidated with resin material prior to curing.

The fibre material of the first type may be in the form of pre-preg composite fibre material. The fibre material of the second type may be substantially free of resin when provided. For example, the fibre material of the second type may be in the form of a dry fibre material. Alternatively, the fibre material of the second type may be provided in the form of a semi-preg composite fibre material. The resin is conveniently in the form of a thermosetting plastic. The resin material provided may include resin material in the form of a film. The film may be dry or may be tacky.

Advantageously, substantially all of the fibres in each respective layer of fibre material of the first type are aligned in a respective direction. Substantially all of the fibres in each respective layer of fibre material of the first type are advantageously aligned along their entire length in a respective direction. Substantially all of the fibres in each respective layer of fibre material of the first type are preferably not crimped, woven or stitched. Each layer of fibre material of the first type may for example be in the form of unidirectional material, for example, a unidirectional strip or band of material. The structural properties of the aircraft component may be enhanced by the use of such unidirectional material.

The fibres in each respective layer of fibre material of the second type are conveniently held together by means of fibres. Preferably the general coherence and configuration of the fibres in the coherent assembly of fibres may be retained solely by means of the arrangement of the fibres. The holding together of the fibres may be effected by means of stitching. For example, each respective layer of fibre material of the second type may include stitching fibres and substantially all of the other fibres in the respective layer are generally aligned in a respective direction, those other fibres being held together as a coherent assembly of fibres by stitching formed by the stitching fibres. The stitching fibres may be made from a material that is different from that of the other fibres. The holding together of the fibres may be effected by means of a weave of fibres. Preferably, the fibre material of the second type includes woven fibre material. The fibre material of the second type may for example be in the form of a woven mat. In contrast, the fibres in the fibre material of the first type are preferably held together by means of the resin and not by fibres.

The fibres in each respective layer of fibre material of the second type may be aligned in a plurality of different directions. The fibre material of the second type in the component may for example include a layer of a bi-directional material. The fibre material of the second type in the component may for example include a layer of a tri-directional material.

The fibre material of the second type that is provided is preferably significantly more flexible than the fibre material of the first type that is provided. Having at least a proportion of fibre material in a more flexible form assists in forming of the layered fibre and resin arrangement, especially if the component has a relatively highly contoured shape.

The further processing of the composite fibre material structure to form the aircraft component may comprise a step of trimming excess material from the structure. The further processing may include a step of machining the structure.

The fibres of the materials of the first and/or second type may be made from the same material. The fibres may be made from different material. For example, the fibres may comprise fibres made from one or more of the materials selected from the group consisting of carbon, glass, and aramid. The resin may be any suitable resin, and is conveniently a thermosetting resin.

The materials of the first and/or second types may be in the form of sheets that are able to be built up in layers to form the desired thickness of composite fibre material structure. The materials may be in the form of tapes.

According to a second aspect of the present invention there is provided a method of manufacturing an aircraft component comprising the sequential steps of:
a) providing pre-preg fibre material, a dry fibre mat, and resin,
b) forming, with the pre-preg fibre material, dry fibre mat, and resin, a layered fibre and resin arrangement,
c) curing resin in the arrangement to form a unitary composite fibre material structure, and
d) further processing to form the aircraft component,
wherein each of the pre-preg fibre material and the dry fibre mat, form a significant proportion of the aircraft component so formed.

Features described with reference to the first aspect of the invention may be incorporated into this second aspect of the invention and vice versa. For example, the pre-preg fibre material may include features described with reference to the first material of the first aspect of the invention. The dry fibre mat may be in the form of a coherent assembly of fibres which is not fully consolidated with resin material, and which is preferably resin free. The dry fibre mat may for example include features described with reference to the second material of the first aspect of the invention.

According to a third aspect of the present invention there is provided an aircraft component comprising composite material comprising layers of fibre material of a first type, and layers of fibre material of a second type, the fibre material layers being embedded in a cured resin matrix, each of the first and second fibre materials forming a significant proportion of the aircraft component, wherein substantially all of the fibres in each respective layer of fibre material of the first type are aligned along their entire length in a respective direction, and fibres in each respective layer of fibre material of the second type include aligned fibres aligned in a respective direction and further fibres that in the absence of the cured resin matrix would hold together the aligned fibres of the material of the second type. The further fibres may include portions that lie in directions non-parallel to the direction of aligned fibres of the second type of material.

The respective directions of the fibres in each layer of fibre material of the first type may be different in a plurality of different layers. The respective directions of the fibres in each layer of fibre material of the first type may be the same in a plurality of different layers. The layers of fibre material of the first type are preferably made from unidirectional pre-preg fibre layers. The fibres of the material of the first type may be aligned in a respective direction and are preferably not woven or stitched relative to each other.

The aligned fibres in a single layer of fibre material of the second type may include a set of fibres aligned in one direction and another set of fibres aligned in a different direction. The respective directions of the fibres in each layer of fibre material of the second type may be the same in a plurality of different layers. The further fibres that hold together the aligned fibres of the material in a layer of the second type may include portions that lie transverse, possibly substantially perpendicular, to aligned fibres in the layer. The further fibres that hold together the aligned fibres of the material in a layer of the second type may include portions that lie transverse, possibly substantially perpendicular, to the plane of the layer. The further fibres may be made from the same material as the aligned fibres. The further fibres may be made from material different from the aligned fibres. The layers of fibre material of the second type may be made from crimped fibre mats, for example, the mats may be formed of woven fibre material. The fibres of the material of the second type may be stitched together. The layers of fibre material of the second type may be made from non-crimp fibre mats, which may for example be stitched together.

The invention is particularly, but not exclusively, applicable to larger aircraft such as passenger-carrying aircraft or freight-carrying aircraft.

Embodiments of the present invention will now be described by way of example with reference to the accompanying schematic drawings of which:
- Figure 1: is a sectional view of a spar according to a first embodiment of the present invention,
- Figure 2: is a perspective view of the embodiment shown in Figure 1,
- Figure 3: is a perspective view of a spar according to a second embodiment,
- Figure 4: is a sectional view of a spar according to a third embodiment of the present invention,
- Figure 5: is a sectional view of a spar according to a fourth embodiment,
- Figure 6: are views of material used in the manufacture of the spars illustrated in Figures 1 to 5, and
- Figure 7: are views of material that could be used instead of the materials shown in Figure 6.

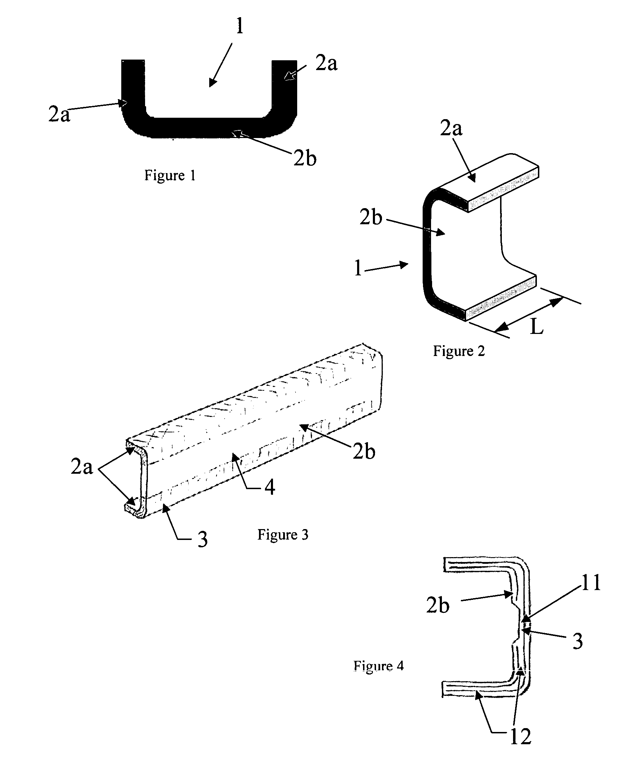

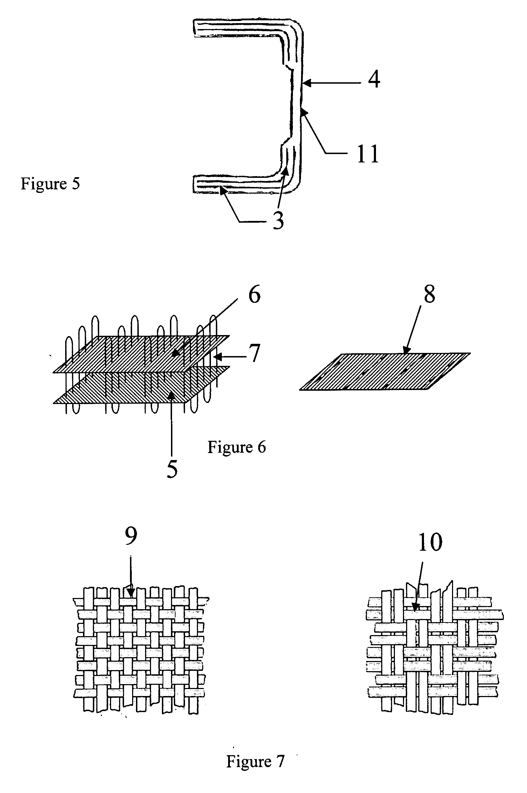

Figures 1 and 2 show a short section of a length of a C-shaped composite material spar 1 defined by a web 2b extending between two flanges 2a. The flanges 2a are each approximately 80 mm long and the web 2b is approximately 500 mm in depth. The length L of the spar 1 is about 15 metres (only 400 mm of which is shown in Figures 1 and 2) and the material thickness is about 12 mm. A spar of these dimensions typifies an aircraft spar in the 100+ seater class. The spar is made of composite material consisting of layers of two different types of fibre material and a resin film system. The layers of the material are each C-shaped in profile and extend across the length and depth of the spar, the number of layers defining the thickness of the spar. The individual layers (each comprising one or more plies) of material of the spar 1 are not shown in Figures 1 and 2 for the sake of clarity. Each layer includes fibres aligned in one or more given directions relative to the longitudinal direction (spanwise of the wing) which is commonly referred to as 0°. According to this particular example of the invention there are 40 carbon fibre layers in a resin matrix making up the composite fibre and matrix material of the spar 1. The layers are either formed from a first fibre material or from a second fibre material. The first fibre material in this case is a unidirectional carbon fibre pre-impregnated with 977-2 resin ("UD CARBON PRE-PREG"). The second fibre material in this case is a bidirectional non-crimp carbon fibre fabric ("BIAXIAL NCF"). Figure 6 shows a single layer of the second material. Each layer of Biaxial NCF consists of a first unidirectional ply 5 of fibres aligned in one direction attached to a second unidirectional ply 6 of fibres aligned in a perpendicular direction, the two plies 5, 6 being attached by means of a further stitching fibre 7 (of nylon) that passes through the plies (i.e. in the through thickness direction). In this case the two layers of fabric have orientations of 45° and 135° to the warp or longitudinal (0°) axis.

The fibre material layers of the spar 1 are arranged as follows:

| Layer | Orientation | Material |
|---|---|---|
| 1 | 45/135 | BIAXIAL NCF |
| 2 | 45/135 | BIAXIAL NCF |
| 3 | 90 | UD CARBON PRE-PREG |
| 4 | 0 | UD CARBON PRE-PEG |
| 5 | 45/135 | BIAXIAL NCF |
| 6 | 90 | UD CARBON PRE-PEG |
| 7 | 45/135 | BIAXIAL NCF |
| 8 | 0 | UD CARBON PRE-PEG |
| 9 | 45/135 | BIAXIAL NCF |
| 10 | 90 | UD CARBON PRE-PREG |
| 11 | 45/135 | BIAXIAL NCF |
| 12 | 0 | UD CARBON PRE-PREG |
| 13 | 45/135 | BIAXIAL NCF |
| 14 | 45/135 | BIAXIAL NCF |
| 15 | 90 | UD CARBON PRE-PEG |
| 16 | 45/135 | BIAXIAL NCF |
| 17 | 0 | UD CARBON PRE-PEG |
| 18 | 45/135 | BIAXIAL NCF |
| 19 | 45/135 | BIAXIAL NCF |
| 20 | 45/135 | BIAXIAL NCF |
| 21 | 45/135 | BIAXIAL NCF |
| 22 | 45/135 | BIAXIAL NCF |
| 23 | 45/135 | BIAXIAL NCF |
| 24 | 0 | UD CARBON PRE-PEG |
| 25 | 45/135 | BIAXIAL NCF |
| 26 | 90 | UD CARBON PRE-PEG |
| 27 | 45/135 | BIAXIAL NCF |
| 28 | 45/135 | BIAXIAL NCF |
| 29 | 0 | UD CARBON PRE-PEG |
| 30 | 45/135 | BIAXIAL NCF |
| 31 | 90 | UD CARBON PRE-PEG |
| 32 | 45/135 | BIAXIAL NCF |
| 33 | 0 | UD CARBON PRE-PEG |
| 34 | 45/135 | BIAXIAL NCF |
| 35 | 90 | UD CARBON PRE-PEG |
| 36 | 45/135 | BIAXIAL NCF |
| 37 | 0 | UD CARBON PRE-PEG |
| 38 | 90 | UD CARBON PRE-PEG |
| 39 | 45/135 | BIAXIAL NCF |
| 40 | 45/135 | BIAXIAL NCF |

In the table above, the plies are numbered from one face of the spar to the other, so that layers 1 and 40 are on the two outer faces whilst plies 20 and 21 are in the middle of the spar. The method of manufacture of the spar of the first embodiment will now be described. It will be noted that the spar has the following fibre orientation, 20% at 0°, 60% at 45° and 135°, 20% at 90°. The thickness of each layer of material is roughly equal and thus the component has slightly more Biaxial NCF (about 60% by volume) than the UD Carbon Pre-preg (about 40% by volume). Each of the two types of material extends across the whole width and length of the component, such that each material type covers 100% of the area of the component when viewed through the layers.

A tacky 977-2 resin film is attached to the Biaxial NCF layers prior to lay-up creating what is known as 'semi-preg' material, where the fibres of the material are attached to, but not fully consolidated with, the resin. The layers are then laid down layer by layer on a male mould tool in the configuration outlined in the above table. The assembled layers are arranged to conform to the required contours by means of the shape of the male tool. Upon completion of lay-up of the layers on the male tool, the assembled layers are removed from the male tool and are then placed in an appropriately shaped female tool. The component is then vacuum-bagged and cured in an autoclave in a manner standard and well known in the prior art. After the curing process, the resultant member is machined in order to create square edges at its periphery and to remove loose end fibres and resin. Thus, a C-shaped spar comprising both unidirectional layers and non-crimp bi-directional layers is formed.

Thus during lay-up good drapability is provided by means of the inclusion of the dry Biaxial NCF layers and lay-up times are faster than would be the case if just UD Carbon Pre-preg layers were used. Good mechanical properties are provided by means of the UD Carbon Pre-preg layers providing tensile strength in the 0 and 90 degrees direction without the detrimental affect of stitching, weaving or crimping, the Biaxial NCF layers providing sufficient strength in the 45 and 135 degrees directions.

Figure 3 shows a spar according to a second embodiment. The spar is constructed in a manner similar to that of the first embodiment. However whilst each of the first and the second materials extend along the length of the spar, neither extend across the entire depth. The top and bottom flanges 2a of the spar are substantially entirely made from the first type of material 3 (UD Carbon Pre-preg), whereas most of the web 2b extending between the flanges 2a in the middle of the spar is substantially entirely made from the second type of material 4 (Biaxial NCF), the composition of the spar in terms of the first and second types of material being indicated with shading in Figure 3. During lay-up, the layers of material are laid with overlays in the regions of the interfaces between the regions of the first material 3 and the region of the second material 4. The volume of the spar formed by the first material 3 is about equal to the volume of the spar formed by the second material 4, each type of material forming about 50% of the total volume of the spar.

Figure 4 shows a spar according to a third embodiment. The spar is constructed in a manner similar to that of the third embodiment, except that a significant region of the web 2b extending between the flanges in the middle of the spar is of a lower thickness than that of the thickness of the flanges. The thinner region 11 is substantially entirely made from the first type of material 3 (UD Carbon Pre-preg), whereas the rest of the spar is made from a interspersed combination 12 of the first and second types of material (both UD Carbon Pre-preg and Biaxial NCF). Again, during lay-up, the layers of material are laid with overlays in the regions of the interfaces between the thin region and the thicker regions.

Figure 5 is a component of the same shape as in Figure 4. In this embodiment, however, the materials are laid such that that central thin region 11 is substantially entirely made from the second type of material 4 (Biaxial NCF), while the rest of the spar is made substantially entirely from the first type of material 3 (UD Carbon Pre-preg).

It will be appreciated that various modifications may be made to the above-described embodiments of the invention without departing from the spirit of the invention. For example, the first and/or second materials could be comprised of different types of fibre or have different arrangements of fibres. The second material could for example be in the form of a woven fabric, as opposed to a stitched fabric. Figure 7 shows two such variations for the second material, including a plain weave 9 and a basket weave 10. The plain weave 9 is a highly interlaced weave, and is therefore a relatively tight weave and is relatively resistant to in-plane shear movement. The plain weave 9 comprises warp yarns that successively cross over and under the fill yarns. The basket weave 10 is a variation of a plain weave, and has warp and fill yarns crossing in pairs in "two up, two down" formation. Consequently, the basket weave 10 is more pliant than the plain weave fabric 9. The woven fabrics can be semi-pregged in a similar way to the non-crimp stitched fabric. The second material could also be in the form of a satin weave.

Whilst in the above-described embodiments relate to a C-shaped spar, the invention has application to other aircraft components, such as for example, skins, stringers, ribs, frames, intercostals, fittings, brackets, bulkheads, pressure vessels, and other like components.

In contrast to the spar of the second embodiment, the spar could comprise first and second materials extending across the length of the spar, but neither extending along the entire depth, such that one end of the spar is substantially entirely made from the first type of material (UD Carbon Pre-preg), whereas the other end of the spar is substantially entirely made from the second type of material (Biaxial NCF). The volume of the spar formed by the first material in such a case might be significantly greater than the volume of the spar formed by the second material, such that for example the first type of material forms about 80% of the total volume of the spar, whereas the second type of material forms about 20% of the total volume of the spar.

Rather than semi-pregging the second material, resin sheets or films may be included during the laying up of the material.

It will also be understood that the ply directions and materials for each layer of the composite material of the first embodiment are simply one example of a suitable lay-up scheme and that many other directions and types of fibre layers may be employed.

## Claims

1. A method of manufacturing an aircraft component comprising the four sequential steps of:
a) providing fibre material of a first type, fibre material of a second type, and resin material, the fibre material of the first type being held in uncured resin material with which the material has previously been impregnated, and the fibres of the fibre material of the second type being in the form of a coherent assembly of fibres which is not fully consolidated with resin material,
b) forming, with the fibre material of the first and second types and the resin material, a layered fibre and resin arrangement,
c) curing resin in the arrangement to form a unitary composite fibre material structure, and
d) further processing the structure to form the aircraft component,
wherein each of the first and second materials form a significant proportion of the aircraft component so formed.

2. A method according to claim 1, wherein the step of forming a layered fibre and resin arrangement includes laying down layers of fibre material of the first and second types and layers of resin sheets.

3. A method according to claim 1 or claim 2, wherein between the step of providing the fibre and resin material and the step of forming a layered fibre and resin arrangement there is performed a step of combining a layer of fibre material of the second type and a resin sheet.

4. A method according to any preceding claim, wherein substantially all of the fibres in each respective layer of fibre material of the first type are aligned in a respective direction.

5. A method according to any preceding claim, wherein fibres in each respective layer of fibre material of the second type are held together by means of fibres.

6. A method according to any preceding claim, wherein a layer of fibre material of the second type includes stitching fibres and substantially all of the other fibres in the layer are aligned in a respective direction, the other fibres being held together as a coherent assembly of fibres by stitching formed by the stitching fibres.

7. A method according to any preceding claim, wherein the fibre material of the second type includes woven fibre material.

8. A method according to any preceding claim, wherein the fibres in each respective layer of fibre material of the second type are aligned in a plurality of different directions.

9. A method according to any preceding claim, wherein the fibre material of the second type that is provided is preferably significantly more flexible than the fibre material of the first type that is provided.

10. A method of manufacturing an aircraft component comprising the sequential steps of:
a) providing pre-preg fibre material, a dry fibre mat, and resin,
b) forming, with the pre-preg fibre material, dry fibre mat, and resin, a layered fibre and resin arrangement,
c) curing resin in the arrangement to form a unitary composite fibre material structure, and
d) further processing to form the aircraft component,
wherein each of the pre-preg fibre material and the dry fibre mat, form a significant proportion of the aircraft component so formed.
